# EUROPÄISCHE PATENTANMELDUNG

(11) **EP 2 138 349 A2**
(43) Veröffentlichungstag der Anmeldung: **30.12.2009**
(21) Anmeldenummer: 09100258.4
(22) Anmeldetag: 29.04.2009
(51) Int. Cl.: B60Q 1/12

(54) **Kurvenlichtsystem und Verfahren hierfür**

(30) Priorität: 23.06.2008 DE 102008002585
(71) Anmelder: ROBERT BOSCH GMBH, 70442 Stuttgart (DE)
(72) Erfinder: Brenner, Matthias-Bastian, 70771, Leinfelden-Echterdingen (DE)

(57) **Zusammenfassung**

Die Erfindung betrifft ein Kurvenlichtsystem (1) insbesondere für ein Fahrzeug mit zumindest einem Scheinwerfer (2), mit einer Betätigungseinheit (3) zur Einstellung einer Winkelstellung des zumindest einen Schweinwerfers und mit einer Steuereinheit (4) zum Steuern der Winkeleinstellung des zumindest einen Scheinwerfers, wobei für die Steuereinheit zur Bestimmung des Sollwertes einer Winkelstellung des zumindest einen Scheinwerfers Signale empfangbar sind, welche umfassen: eine Fahrzeuggeschwindigkeit und/oder einen Lenkwinkel und Streckendaten zumindest der nachfolgend befahrbaren Wegstrecke, wobei aufgrund dieser Daten die Winkelstellung des zumindest einen Scheinwerfers einstellbar sind. Die Erfindung betrifft weiterhin ein Verfahren hierfür.

## Beschreibung

### Technisches Gebiet

Die Erfindung betrifft ein Kurvenlichtsystem mit zumindest einem Fahrzeugscheinwerfer, einer Betätigungseinheit zur Einstellung der Winkelstellung des zumindest einen Schweinwerfers und mit einer Steuereinheit zum Steuern der Winkeleinstellung des zumindest einen Scheinwerfers, insbesondere nach dem Oberbegriff von Anspruch 1. Die Erfindung betrifft weiterhin ein diesbezügliches Verfahren.

### Stand der Technik

Fahrzeuge haben typischer Weise starr eingebaute Scheinwerfer, so dass bei einem Befahren einer kurvigen Strecke der Scheinwerfer nicht immer die vor dem Fahrzeug liegende Strecke ausleuchtet, sondern den Seitenstreifen oder auch die Gegenfahrbahn. Dadurch wird die vor dem Fahrzeug liegende Strecke nicht immer gut ausgeleuchtet, so dass gegebenenfalls ein hinter einer Kurve auf der Straße liegendes Hindernis erst spät erkannt wird. Um dies zu vermeiden ist das Kurvenlicht entwickelt worden, bei welchem mittels der Lenkwinkeleinstellung auch ein Schwenkwinkel der Scheinwerfer eingestellt wird, so dass beim Lenken in eine Kurve die Scheinwerfer auch in Richtung der Kurve verschwenkt werden und die Fahrstrecke in oder nach der Kurve dadurch besser ausgeleuchtet wird. Solche Kurvenlichtsysteme sind im Stand der Technik bekannt.

Dabei bedeutet im Weiteren eine Einstellung der Winkelstellung des zumindest einen Schweinwerfers nicht unbedingt, dass der Scheinwerfer als solches in seiner Winkelstellung relativ zur Fahrzeuglängsachse verstellt wird, sondern es genügt dabei durchaus, dass das aus dem Scheinwerfer austretende Licht in seine Richtung verschwenkt wird, wobei die Verschwenkung relativ zu einer Lichtverteilung in Normalstellung durchgeführt werden kann. Dabei kann zur Verschwenkung der Winkelstellung durchaus ein Spiegel, eine Linse und/oder eine Blende verstellt oder verschwenkt werden. Die Einstellung der Winkelstellung des Scheinwerfers bedeutet somit, dass die Leuchtrichtung des Scheinwerfers in seiner Winkelstellung eingestellt wird. Dabei ist es ausdrücklich nicht zwingend, dass der Scheinwerfer als solcher verstellt wird, sondern es genügt, dass durch interne Verstellung die Leuchtrichtung verstellt wird, wie durch Verstellung von Spiegeln, Linsen, Blenden etc.

Auch bekannt sind alternative Kurvenlichtsysteme, wie beispielsweise das in der DE 196 39 526 A1 offenbarte Kurvenlicht, welches beim Befahren von kurvigen Strecken ein Zuschalten von Licht mit einem größeren horizontalen Streubereich dem Abblendlicht des Scheinwerfers zugeschaltet wird.

Solche Kurvenlichtsysteme haben jedoch den Nachteil, dass insbesondere vor dem Einlenken in die Kurve und bei Befahren eines Kreisverkehrs oder bei Wechselkurven die vor dem Fahrzeug liegende Straße durch das über den Lenkwinkel gesteuerte Verschwenken der Scheinwerfer noch nicht optimal ausgeleuchtet wird, da bei noch unverändertem Lenkverhalten der Scheinwerfer noch nicht in die Kurve geleuchtet wird, obwohl die Kurve bereits erkennbar ist oder der Scheinwerfer in die Kurve gelenkt wird, obwohl sich die Kurve bereits in eine andere Richtung entwickelt, also ihre Kurvenkrümmung ändert.

### Darstellung der Erfindung: Aufgabe, Lösung, Vorteile

Es ist die Aufgabe der Erfindung, ein Kurvenlichtsystem und ein Verfahren hierfür zu schaffen, bei welchem die obigen Nachteile vermindert oder gegebenenfalls sogar vermieden werden.

Dies wird erreicht mit den Merkmalen von Anspruch 1, wonach ein Kurvenlichtsystem geschaffen wird, insbesondere für ein Fahrzeug mit zumindest einem Scheinwerfer, mit einer Betätigungseinheit zur Einstellung einer Winkelstellung des zumindest einen Schweinwerfers und mit einer Steuereinheit zum Steuern der Winkeleinstellung des zumindest einen Scheinwerfers, wobei für die Steuereinheit zur Bestimmung des Sollwertes einer Winkelstellung des zumindest einen Scheinwerfers Signale empfangbar sind, welche eine Fahrzeuggeschwindigkeit und/oder einen Lenkwinkel und Streckendaten zumindest der nachfolgend befahrbaren Wegstrecke umfassen, wobei aufgrund dieser Daten die Winkelstellung des zumindest einen Scheinwerfers einstellbar sind. Dadurch wird es möglich, den zumindest einen Scheinwerfer prädiktiv dem Fahrbahnverlauf gemäß einzustellen, um den Fahrbahnverlauf vor dem Fahrzeug auszuleuchten.

Dabei ist es besonders zweckmäßig, wenn die Streckendaten der zumindest nachfolgend befahrbaren Straße oder Wegstrecke von einem Navigationssystem zur Verfügung stellbar sind. Dabei liegen die Daten vorteilhaft als Kartendaten vorzugsweise auf einem Datenträger vor oder sie können vorteilhaft auch per kabelloser Datenübertragung beispielsweise von einem Datenserver geladen werden.

Weiterhin ist es zweckmäßig, wenn neben den Kartendaten auch die aktuelle Position zur Verfügung stellbar ist. Dies kann vorzugsweise mittels einer GPS- oder Galileo-Lokalisierung erfolgen, die in dem Navigationssystem implementiert oder enthalten sein kann. Auch kann die Position anderweitig außerhalb des Navigationssystems ermittelt werden und als Datensatz zur Verfügung gestellt werden.

Auch ist es zweckmäßig, wenn mittels der Streckendaten der zumindest nachfolgend bzw. anschließend befahrbaren Wegstrecke aufgrund der Kartendaten und der aktuellen Position und aufgrund der Fahrzeuggeschwindigkeit und/oder des Lenkwinkels eine einzustellende Winkelstellung der Scheinwerfer zur Ausleuchtung der nachfolgend bzw. anschließend befahrbaren Wegstrecke bestimmbar ist. Dadurch wird vorteilhaft erreicht, dass bereits vor dem Eintritt in eine Kurve oder vor Befahren einer Wechselkurve oder eines Kreisverkehrs eine entsprechende Änderung der Winkelstellung der Scheinwerfer erfolgt, um dem wechselnden Krümmungsverhalten der nachfolgenden Wegstrecke gerecht zu werden.

Gemäß der Erfindung wird die von dem Kurvenlichtsystem ermittelte Winkelstellung des zumindest einen Scheinwerfers mittels der Betätigungseinheit eingestellt. Dabei kann jeder Scheinwerfer eine eigene Betätigungseinheit aufweisen oder es kann eine Betätigungseinheit für eine Mehrzahl von Scheinwerfern vorgesehen sein.

Die Aufgabe hinsichtlich des Verfahrens wird erreicht mit einem Verfahren zur Steuerung eines Kurvenlichtsystems insbesondere für ein Fahrzeug mit zumindest einem Scheinwerfer, einer Betätigungseinheit zur Einstellung einer Winkelstellung des zumindest einen Schweinwerfers und mit einer Steuereinheit zum Steuern der Winkeleinstellung des zumindest einen Scheinwerfers, wobei die Steuereinheit zur Bestimmung des Sollwertes einer Winkelstellung des zumindest einen Scheinwerfers Signale empfängt, welche eine Fahrzeuggeschwindigkeit und/oder einen Lenkwinkel und Streckendaten zumindest der nachfolgend befahrbaren Wegstrecke umfassen, wobei aufgrund dieser Daten die Winkelstellung des zumindest einen Scheinwerfers bestimmt und eingestellt werden.

Dabei ist es besonders vorteilhaft, wenn die Streckendaten der zumindest nachfolgend befahrbaren Wegstrecke von einem Navigationssystem zur Verfügung gestellt werden. Vorteilhaft werden Kartendaten zumindest für einen aktuellen Kartenausschnitt zur Verfügung gestellt.

Erfindungsgemäß ist es vorteilhaft, wenn neben den Kartendaten auch die aktuelle Position zur Verfügung gestellt wird. Dadurch kann die erwünschte Einstellung des Winkels des zumindest einen Scheinwerfers relativ zur Fahrzeuglängsrichtung eingestellt werden, bevor beispielsweise eine Kurve erreicht ist. Es erfolgt eine prädiktive Einstellung der Winkelstellung des zumindest einen Scheinwerfers.

Auch ist es zweckmäßig, wenn mittels der Streckendaten der zumindest nachfolgend befahrbaren Wegstrecke aufgrund der Kartendaten und der aktuellen Position und aufgrund der Fahrzeuggeschwindigkeit und/oder des Lenkwinkels eine einzustellende Winkelstellung der Scheinwerfer zur Ausleuchtung der nachfolgend befahrbaren Wegstrecke bestimmt wird.

Dabei ist es auch zweckmäßig, wenn die ermittelte Winkelstellung des zumindest einen Scheinwerfers mittels der Betätigungseinheit eingestellt wird.

Besonders vorteilhaft ist es, wenn die Einstellung der Winkelstellung des zumindest einen Scheinwerfers lediglich auf Straßen einer vorgegebenen Klassifizierung durchgeführt wird. Dabei kann eine Durchführung des erfindungsgemäßen Verfahrens beispielsweise auf das Befahren von Landstraßen oder von landstraßenähnliche Straßen begrenzt werden. Üblicher Weise ist der Krümmungsradius auf Autobahnen so groß, dass eine ausreichende Ausleuchtung der Fahrbahn auch ohne Verstellung der Winkelstellung möglich ist und darauf gegebenenfalls verzichtet werden kann.

Weiterhin kann es vorteilhaft sein, wenn die Einstellung der Winkelstellung des zumindest einen Scheinwerfers lediglich bei Geschwindigkeiten oberhalb einer Grenzgeschwindigkeit durchgeführt wird. Dies geht davon aus, dass bei geringen Geschwindigkeiten es ausreicht, solch ein Verfahren nicht einzusetzen, da die bei der geringen Geschwindigkeit zurückgelegte Wegstrecke gering ist im Vergleich zur Sichtweite.

Weitere vorteilhafte Ausgestaltungen ergeben sich aus den Merkmalen der Unteransprüche.

### Kurze Beschreibung der Zeichnungen

Nachstehend wird die Erfindung auf der Grundlage eines Ausführungsbeispiels anhand der Zeichnungen näher erläutert. Es zeigt:

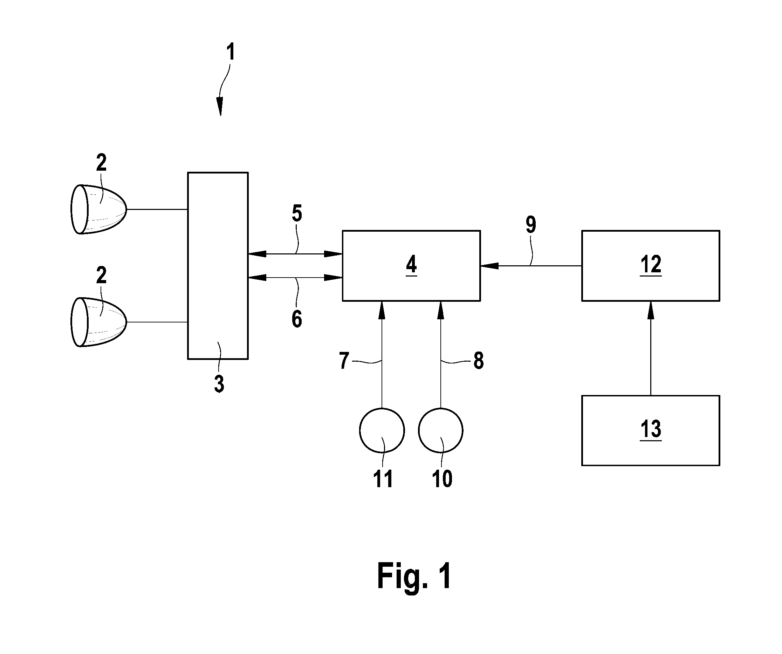

- Fig. 1: eine schematische Darstellung der erfindungsgemäßen Kurvenlichtsystems.

### Bevorzugte Ausführung der Erfindung

Die Figur 1 zeigt schematisch ein Kurvenlichtsystem 1, insbesondere für ein Fahrzeug, wobei das Kurvenlichtsystem 1 zumindest einen Scheinwerfer 2, vorteilhaft zumindest ein Paar von Scheinwerfern 2 umfasst. Der Scheinwerfer 2 ist dabei mittels zumindest einer Betätigungseinheit 3 in seiner Winkelstellung des ausgesendeten bzw. abgestrahlten Lichts, also in seiner Leuchtrichtung, einstellbar.

Weiterhin verfügt das System 1 über eine Steuereinheit 4, die der Betätigungseinheit 3 Steuersignale 5 zur Einstellung der Winkelstellung übermittelt und gegebenenfalls auch Signale 6 über die aktuelle Einstellung an die Steuereinheit zurückmeldet.

Durch die Steuersignale 5 erfolgt die Einstellung einer Winkelstellung des zumindest einen Schweinwerfers 2.

Die Steuereinheit 4 bestimmt die Sollwerte der Winkelstellung des zumindest einen Scheinwerfers 2 und empfängt dazu zumindest einzelne Signale, wie eine Fahrzeuggeschwindigkeit 7 und/oder einen Lenkwinkel 8 und Streckendaten 9 zumindest der nachfolgend befahrbaren Wegstrecke. Die Steuereinheit 4 bestimmt aufgrund dieser Daten die Krümmung der Wegstrecke, die vor dem Fahrzeug liegt und berechnet bzw. bestimmt anhand dieser Krümmung die Winkelstellung des zumindest einen Scheinwerfers 2, welche anschließend einstellbar ist.

Die Daten der Fahrzeuggeschwindigkeit 7 können beispielsweise von einem Kombiinstrument 11 empfangen werden, welches auch die Fahrzeuggeschwindigkeit ermittelt und anzeigt.

Die Daten des Lenkwinkels 8 können beispielsweise von einem Lenkwinkelsensor 10 empfangen werden.

Die Streckendaten 9 der zumindest nachfolgend befahrbaren Wegstrecke werden vorzugsweise von einem Navigationssystem 12 zur Verfügung gestellt. Besonders eignet sich das Navigationssystem 12 auch, weil es neben den Kartendaten auch die aktuelle Position des Fahrzeugs zur Verfügung stellen kann, die das Navigationssystem 12 vorteilhaft per empfangener GPS- oder Galileo-Daten ermittelt.

Besonders vorteilhaft ist es erfindungsgemäß, wenn die Steuereinheit 4 mittels der Streckendaten der zumindest nachfolgend befahrbaren Wegstrecke aufgrund der Kartendaten des Navigationssystems 12 und der aktuellen Position des Fahrzeugs und aufgrund der Fahrzeuggeschwindigkeit 7 und/oder des Lenkwinkels 8 eine einzustellende Winkelstellung der Scheinwerfer 2 zur Ausleuchtung der nachfolgend befahrbaren Wegstrecke ermittelt.

Die in dem Navigationssystem 12 gespeicherten Kartendaten 13 sind vorzugsweise für einen vorgegebenen Kartenausschnitt vorgesehen und können in einem Speicher gespeichert sein oder drahtlos übermittelbar sein, so dass dem Fahrzeug stets die Kartendaten vorliegen hat, die in seiner Umgebung liegen oder die für die aktuelle Aufgabe benötigt werden, wie beispielsweise zur Bildschirmanzeige oder zur Routenberechnung.

Typischer Weise sind in einer Karte oder in einem Kartenausschnitt die Straßen nicht gleichrangig, sondern es werden Klassifizierungen definiert, in welche die Straßen der Karte eingruppiert werden. Erfindungsgemäß kann die Steuereinheit 4 die Einstellung der Winkelstellung des zumindest einen Scheinwerfers 2 steuern, in Abhängigkeit der aktuell befahrenen Straße, wobei eine solche Steuerung lediglich dann durchgeführt wird, wenn die aktuell befahrene Straße einer vorgegebenen Klassifizierung entspricht. Beispielsweise kann eine Steuerung vorzugsweise nur auf Landstraßen oder landstraßenähnlichen Straßen erfolgen, wobei eine Steuerung in innerstädtischen Straßen und/oder auf Autobahnen auch unterbleiben kann.

Darüber hinaus kann eine Steuerung vorzugsweise auch in Abhängigkeit der Fahrzeuggeschwindigkeit erfolgen, wobei eine Steuerung bei Geschwindigkeiten oberhalb einer vorgebbaren Grenzgeschwindigkeit durchgeführt wird und unterhalb dieser die Winkelverstellung nicht angesteuert wird.

## Patentansprüche

1. Kurvenlichtsystem (1) insbesondere für ein Fahrzeug mit zumindest einem Scheinwerfer, einer Betätigungseinheit (3) zur Einstellung einer Winkelstellung des zumindest einen Schweinwerfers (2) und mit einer Steuereinheit (4) zum Steuern der Winkeleinstellung des zumindest einen Scheinwerfers (2), **dadurch gekennzeichnet, dass** für die Steuereinheit zur Bestimmung des Sollwertes einer Winkelstellung des zumindest einen Scheinwerfers Signale empfangbar sind, welche umfassen: eine Fahrzeuggeschwindigkeit (7) und/oder einen Lenkwinkel (8) und Streckendaten (9) zumindest der nachfolgend befahrbaren Wegstrecke, wobei aufgrund dieser Daten die Winkelstellung des zumindest einen Scheinwerfers einstellbar sind.

2. Kurvenlichtsystem nach Anspruch 1, **dadurch gekennzeichnet, dass** die Streckendaten (9) der zumindest nachfolgend befahrbaren Wegstrecke von einem Navigationssystem (12) zur Verfügung stellbar sind.

3. Kurvenlichtsystem nach Anspruch 1 oder 2, **dadurch gekennzeichnet, dass** neben die Streckendaten (9) neben den Kartendaten (13) auch die aktuelle Position zur Verfügung stellen.

4. Kurvenlichtsystem nach einem der vorhergehenden Ansprüche 1 bis 3, **dadurch gekennzeichnet, dass** mittels der Streckendaten (9) der zumindest nachfolgend befahrbaren Wegstrecke aufgrund der Kartendaten (13) und der aktuellen Position und aufgrund der Fahrzeuggeschwindigkeit (7) und/oder des Lenkwinkels (8) eine einzustellende Winkelstellung der Scheinwerfer zur Ausleuchtung der nachfolgend befahrbaren Wegstrecke bestimmbar ist.

5. Kurvenlicht nach einem der vorhergehenden Ansprüche, **dadurch gekennzeichnet, dass** die ermittelte Winkelstellung des Scheinwerfers (2) mittels der Betätigungseinheit einstellbar ist.

6. Verfahren zur Steuerung eines Kurvenlichtsystems (1) insbesondere für ein Fahrzeug mit zumindest einem Scheinwerfer (2), einer Betätigungseinheit (3) zur Einstellung einer Winkelstellung des zumindest einen Schweinwerfers (2) und mit einer Steuereinheit (4) zum Steuern der Winkeleinstellung des zumindest einen Scheinwerfers (2), wobei die Steuereinheit zur Bestimmung des Sollwertes einer Winkelstellung des zumindest einen Scheinwerfers Signale empfängt, welche eine Fahrzeuggeschwindigkeit und/oder einen Lenkwinkel und Streckendaten zumindest der nachfolgend befahrbaren Wegstrecke umfassen, wobei aufgrund dieser Daten die Winkelstellung des zumindest einen Scheinwerfers bestimmt und eingestellt werden.

7. Verfahren nach Anspruch 6, **dadurch gekennzeichnet, dass** die Streckendaten der zumindest nachfolgend befahrbaren Wegstrecke von einem Navigationssystem (12) zur Verfügung gestellt werden.

8. Verfahren nach Anspruch 6 oder 7, **dadurch gekennzeichnet, dass** neben den Kartendaten auch die aktuelle Position zur Verfügung gestellt wird.

9. Verfahren nach einem der vorhergehenden Ansprüche 6 bis 8, **dadurch gekennzeichnet, dass** mittels der Streckendaten der zumindest nachfolgend befahrbaren Wegstrecke aufgrund der Kartendaten und der aktuellen Position und aufgrund der Fahrzeuggeschwindigkeit und/oder des Lenkwinkels eine einzustellende Winkelstellung der Scheinwerfer zur Ausleuchtung der nachfolgend befahrbaren Wegstrecke bestimmt wird.

10. Verfahren nach einem der vorhergehenden Ansprüche, **dadurch gekennzeichnet, dass** die ermittelte Winkelstellung des zumindest einen Scheinwerfers mittels der Betätigungseinheit eingestellt wird.

11. Verfahren nach einem der vorhergehenden Ansprüche 6 bis 10, **dadurch gekennzeichnet, dass** die Einstellung der Winkelstellung des zumindest einen Scheinwerfers lediglich auf Straßen einer vorgegebenen Klassifizierung durchgeführt wird.

12. Verfahren nach einem der vorhergehenden Ansprüche 6 bis 11, **dadurch gekennzeichnet, dass** die Einstellung der Winkelstellung des zumindest einen Scheinwerfers lediglich bei Geschwindigkeiten oberhalb einer Grenzgeschwindigkeit durchgeführt wird.
